# EUROPÄISCHE PATENTSCHRIFT

(11) **EP 2 082 067 B1**
(45) Veröffentlichungstag und Bekanntmachung des Hinweises auf die Patenterteilung: **04.04.2012**
(21) Anmeldenummer: 07818595.6
(22) Anmeldetag: 01.10.2007
(51) Int. Cl.: C21B 13/14, C21B 13/00

(54) **VERFAHREN UND VORRICHTUNG ZUR HERSTELLUNG VON GESCHMOLZENEM MATERIAL**
METHOD AND DEVICE FOR PRODUCING MOLTEN MATERIAL
PROCÉDÉ ET DISPOSITIF POUR PRODUIRE UNE MATIÈRE FONDUE

(30) Priorität: 13.10.2006 DE 102006048600
(43) Veröffentlichungstag der Anmeldung: 29.07.2009
(73) Patentinhaber: Siemens VAI Metals Technologies GmbH, 4031 Linz (AT)
(72) Erfinder: HAUZENBERGER, Franz, 4030 Linz (AT); MILLNER, Robert, 3382 Loosdorf (AT); REIN, Norbert, 1060 Wien (AT); SCHENK, Johannes, 4040 Linz (AT); SCHMIDT, Martin, 4060 Leonding (AT); VULETIC, Bogdan, 40451 Düsseldorf (DE); WIEDER, Kurt, 4311 Schwertberg (AT); WURM, Johann, 4283 Bad Zell (AT)
(74) Vertreter: Maier, Daniel Oliver
(86) Internationale Anmeldenummer: PCT/EP2007/008515
(87) Internationale Veröffentlichungsnummer: WO 2008/046504

(56) Entgegenhaltungen:
- EP-A- 1 826 281
- WO-A-99/46411
- DE-A1- 3 628 102
- GB-A- 1 348 939
- US-A- 5 582 029

## Beschreibung

Die Erfindung betrifft ein Verfahren zur Herstellung von geschmolzenem Metall, wobei Sauerstoff, Reduktionsmittel und in einem Reduktionsreaktor reduziertes Eisen in einen Schmelzvergaser eingebracht werden, das Reduktionsmittel mit dem Sauerstoff vergast und durch die dabei entstehende Wärme das reduzierte Eisen geschmolzen wird, wobei das Kuppelgas aus dem Schmelzvergaser als zumindest ein Anteil des Reduktionsgases verwendet wird, und wobei reagiertes Topgas aus dem Reduktionsreaktor abgezogen wird, sowie eine Anlage zur Durchführung des Verfahrens, mit einem oder mehreren Reduktionsreaktoren mit Reduktionsgaszuführung, einem Schmelzvergaser mit Sauerstoffzuführung und einem Zuführsystem für Reduktionsmittel, zumindest eine Leitung für die Zuführung des Kuppelgases aus dem Schmelzvergaser in den Reduktionsreaktor und zumindest eine Leitung für das Abziehen des Topgases aus dem Reduktionsreaktor.

Bei Schmelzreduktionsanlagen, wie etwa in der DE 36 28 102 A1 beschrieben, wird Sauerstoff mit einer Temperatur von 25°C und einer Reinheit von ≥95 Vol-% über die Düsen in den Einschmelzvergaser eingeblasen um die Reduktionsmittel (überwiegend Kohle und Kohlebriketts) zu vergasen und die erforderliche Wärme für das Schmelzen des reduzierten Eisens zur Verfügung zu stellen. Das Kuppelgas des Einschmelzvergasers (ESV) wird zur indirekten Reduktion in einem Festbett-Reduktionsschacht (FBRS) oder in Wirbelschichtreaktoren (WSR) verwendet, danach wird es als Topgas abgezogen. Das gereinigte Exportgas, welches sich aus dem Gichtgas aus dem Direktreduktionsaggregat und dem Kuppelgas aus dem Einschmelzvergaser zusammensetzt, weist folgende typische Analyse bei 1.5 barg auf: CO 45 Vol-%, CO₂ 30 Vol-%, H₂ 19 Vol-%, H₂O 3 Vol-% und N₂ 3 Vol-%. Es muss aufgrund des Gasüberschusses einer Verwertung und Gesamtenergieoptimierung zugeführt werden.

Doch nicht nur das Topgas bzw. Exportgas von Schmelzreduktionsanlagen beinhaltet große fühlbare Wärmemengen (Topgastemperaturen liegen bei ca. 250°C-500°C), sondern auch der Anteil des Reduktionsgases, der nicht in den Reduktionsreaktor eingeleitet wird, sondern als Überschussgas für die Druckregelung der Anlage und als Kühlgas verwendet wird.. Die Temperatur des Reduktionsgases liegt bei ca. 700°C - 900°C. Zur Nutzung von Exportgas in einem Kraftwerk (Dampfkraftwerk oder Gas-und Dampfkraftwerk) bzw. für die metallurgische Nutzung (z. B. Direktreduktionsanlage) muss das Gas von den darin enthaltenen Verunreinigungen (Staub, Teer) gereinigt werden. Dazu werden heutzutage meist Nasswäscher angewendet, die das Gas gleichzeitig auf ca. 40-45°C abkühlen und dadurch dem Gas den überwiegenden Anteil der fühlbaren Wärme entziehen. Die Wärme wird durch das Prozesswasser abgeführt und über Kühltürme an die Umgebung angegeben.

Die Aufgabe der vorliegenden Erfindung war daher ein Verfahren bzw. eine Anlage wie eingangs beschrieben anzugeben, mit erhöhter Energie- und Rohstoffeffizienz.

Zur Lösung dieser Aufgabe ist das Verfahren nach Anspruch 1 definiert, erfindungsgemäß dadurch gekennzeichnet, dass zumindest ein Teil der Wärmeenergie des Topgases und/oder des zur Verwendung als Kühlgas und als Überschussgas vorgesehenen Anteils des Reduktionsgases zum indirekten Aufheizen zumindest eines weiteren, im Verfahren verwendeten Gases genutzt wird.

Gemäß einer ersten erfindungsgemäßen Variante des Verfahrens ist vorgesehen, zumindest ein Teil des Topgases nach zumindest einer Kühlung bzw. Reinigung und einem Wärmetausch mit dem heißen Prozessgas in den Reduktionsreaktor rückgeführt wird. Durch die Aufheizung des Rezirkulationsgases nach Wärmetausch mit dem Topgas oder dem Kühlgas, von ca. 40°C auf bis zu 400°C, können größere Mengen dieses Gases vor den Reduktionsschacht rückgeführt und als Reduktionsgas genutzt werden, ohne dass die Installation eines Reduktionsgasaufwärmofens erforderlich wäre.

Gemäß einer möglichen erfindungsgemäßen Variante des Verfahrens ist vorgesehen, dass die Reinigung mittels einer Nasswäsche erfolgt. Diese ermöglicht eine gleichzeitige Kühlung bzw. Reinigung.

Vorteilhafterweise ist dafür vorgesehen, dass das rückgeführte, erwärmte Topgas dem Kuppelgas zugegeben und gemeinsam mit diesem dem Reduktionsreaktor zugeführt wird, wobei vorzugsweise partikelförmige Inhaltsstoffe vor Eintritt in den Reduktionsreaktor aus dem Gasgemisch abgeschieden werden.

Gemäß einer weiteren erfindungsgemäßen Verfahrensvariante kann zumindest ein Teil des Topgases nach zumindest einer Kühlung bzw. Reinigung, und Wärmetausch mit dem Topgas und/oder des zur Verwendung als Kühlgas und als Überschussgas vorgesehenen Anteils des Reduktionsgases, in den Schmelzvergaser eingebracht werden. Durch die Erwärmung des in den Schmelzvergaser rückgeführten Gases sind höhere Eindüsraten von Topgas, rezirkuliertem Produktgas aus einer CO₂-Entfernungsanlage (z.B. Druckwechselanlage, Aminwäsche, Benfieldwäsche etc.), von einer Feinkohleeindüsung oder Kunststoffeindüsung, usw. möglich, da die Erwärmung eine Kompensation für die an sich durch die Eindüsung erniedrigte adiabatische Flammentemperatur (RAFT) ist.

In allen Fällen wird vorteilhafterweise das rückgeführte Topgas vor dem Wärmetausch verdichtet und/oder dessen Kohlendioxid-Gehalt nach Abkühlung, vorzugsweise auf 30 bis 50°C, reduziert, vorzugsweise auf 2 bis 3 Vol-%.

Eine weitere Variante des Verfahrens ist erfindungsgemäß dadurch gekennzeichnet, dass die Wärmeenergie des Topgases und/oder des zur Verwendung als Kühlgas und als Überschussgas vorgesehenen Anteils des Reduktionsgases zum Aufheizen des Sauerstoffs für den Schmelzvergaser verwendet wird. Die bei der Vergasung der Kohle, Kohlebriketts und gegebenenfalls Koks mit Sauerstoff freiwerdende Wärme wird zum Kalzinieren der Zuschlagstoffe, zum Aufwärmen des Festbettes im Einschmelzvergaser (Kohle, Kohlebriketts, DRI, Zuschläge) und zum Aufschmelzen des DRI benötigt. Durch die höhere Temperatur des Sauerstoffes der über die Düsen bzw. über die Staubbrenner in den Schmelzvergaser eingeblasen wird ergibt sich ein niedrigerer Reduktionsmittelverbrauch und daher Einsparung von Kohle und Kohlebriketts als Reduktionsmittel. Darüber hinaus kann die Menge an Sauerstoff ebenfalls reduziert werden. Durch die Vorwärmung des Sauerstoffs werden ebenfalls höhere Eindüsraten von Topgas, rezirkuliertem Produktgas aus einer CO₂-Entfernungsanlage, von einer Feinkohleeindüsung oder Kunststoffeindüsung, usw. ermöglicht und in Kombination mit der Rückführung von erwärmtem Topgas bzw. daraus erzeugtem Produktgas in den Einschmelzvergaser kann die Rezirkulationsmenge an Topgas bzw. Produktgas etc. maximiert werden.

Aus Sicherheitsgründen ist dabei vorgesehen, dass der Wärmetausch zwischen dem Topgas und/oder dem zur Verwendung als Kühlgas und als Überschussgas vorgesehenen Anteil des Reduktionsgases und dem Sauerstoff über ein Trägermedium und zwei Wärmetauschprozesse erfolgt. Dabei kommt bevorzugterweise Abfall-N₂ oder Wasserdampf zum Einsatz.

Vorteilhafterweise kann das Trägermedium nach Wärmetausch mit dem Sauerstoff, allenfalls zusammen mit einem Teilstrom des ungekühlten Trägermediums zur Vorwärmung von im Verfahren benötigtem Verbrennungsgas genutzt werden.

Allenfalls kann auch vorgesehen sein, dass die Wärmeenergie des Topgases und/oder des zur Verwendung als Kühlgas und als Überschussgas vorgesehenen Anteils des Reduktionsgases zur Dampferzeugung genutzt wird:

Vorzugsweise wird dabei die Wärmeenergie des Dampfes zur Aufheizung des Sauerstoffes für den Schmelzvergaser verwendet.

Die eingangs beschriebene Anlage nach Anspruch 15 definiert, ist erfindungsgemäß zur Lösung der Aufgabenstellung gekennzeichnet durch zumindest einen Wärmetauscher in einer Leitung für das Abziehen des Topgases und/oder im Kühlgas- und Überschussgas-System, welcher Wärmetauscher durch zumindest ein weiteres im Verfahren verwendetes Gas durchströmt wird.

Als Kühlgas- und Überschussgäs-System ist dabei das Leitungssystem zu verstehen, durch welches der zur Verwendung als Kühlgas und als Überschussgas vorgesehene Anteil des Reduktionsgases nach seiner Abtrennung aus dem in den Reduktionsreaktor geleiteten Reduktionsgasstrom fließt.

Gemäß einer möglichen erfindungsgemäßen Ausführungsform ist das Reinigungsaggregat als Nasswäscher ausgeführt, sodass gleichzeitig gekühlt und gereinigt werden kann.

Um Staubablagerungen in den Wärmtauschern zu vermeiden, ist vorteilhafterweise vorgesehen, dass der oder jeder Wärmetauscher als Rohrwärmetauscher oder Rohrbündelwärmetauscher, ausgeführt ist und vom Topgas von oben nach unten durchströmt werden.

Gemäß einer weiteren erfindungsgemäßen Ausführungsform geht nach dem Kühl-und Reinigungsaggregat für das Topgas eine Rückleitung für das Topgas aus und führt zum Wärmetauscher, und führt die Rückleitung vom Wärmetauscher weiter zum Reduktionsreaktor. Damit kann ohne zusätzlichem Reduktionsgasaufwärmofen eine große Menge an Gas rückgeführt und als Reduktionsgas genutzt werden.

Vorteilhafterweise ist dabei vorgesehen, dass die Rückleitung vom Wärmetauscher in die Verbindungsleitung zwischen Schmelzvergaser und Reduktionsreaktor für das Kuppelgas mündet, vorzugsweise vor einem allfälligen Partikelabscheider.

Eine weitere erfindungsgemäße Ausführungsform ist dadurch gekennzeichnet, dass nach dem Kühl- und Reinigungsaggregat eine Rückleitung für das Topgas ausgeht und zum Wärmetauscher führt, und dass die Rückleitung vom Wärmetauscher weiter zum Schmelzvergaser führt, vorzugsweise bis zur Mündung der Sauerstoffzuführung parallel zu dieser verläuft.

Größtmögliche Flexibilität in der Einstellung bzw. Beeinflussung von Verfahrensparametern in Verbindung mit der jeweils höchstmöglichen Energierückgewinnung ist bei einer vorteilhaften Ausführungsform der Anlage gewährleistet, bei welcher vor dem Wärmetauscher ein Verdichter, allenfalls auch eine Kühleinrichtung und eine Kohlendioxid-Reduktionsstufe, eingesetzt sind, wobei der Ausgang des Verdichters und der Ausgang der Kohlendioxid-Reduktionsstufe in eine gemeinsame Zuführleitung zum Wärmetauscher führen.

Um die rückgewonnene Wärmeenergie auch bei höchstmöglicher Sicherheit für die Aufheizung des Sauerstoffs für den Einschmelzvergaser nutzen zu können, wird vorteilhafterweise die Anlage derart gestaltet, dass in der Sauerstoffzuführung zum Schmelzvergaser ein weiterer Wärmetauscher eingesetzt ist, der mit zumindest einem durch das Topgas und/oder den zur Verwendung als Kühlgas und als Überschussgas vorgesehenen Anteil des Reduktionsgases durchströmten Wärmetauscher einen von einem Wärmeträgerfluid, vorzugsweise in flüssiger und/oder dampfförmiger Form, durchströmten Kreis bildet.

Dabei kann für optimale Energieausnutzung im Prozess vorgesehen sein, dass im Kreis des Wärmeträgerfluids zumindest ein weiterer Wärmetauscher für zumindest ein im Verfahren benötigtes Verbrennungsgas angeordnet ist.

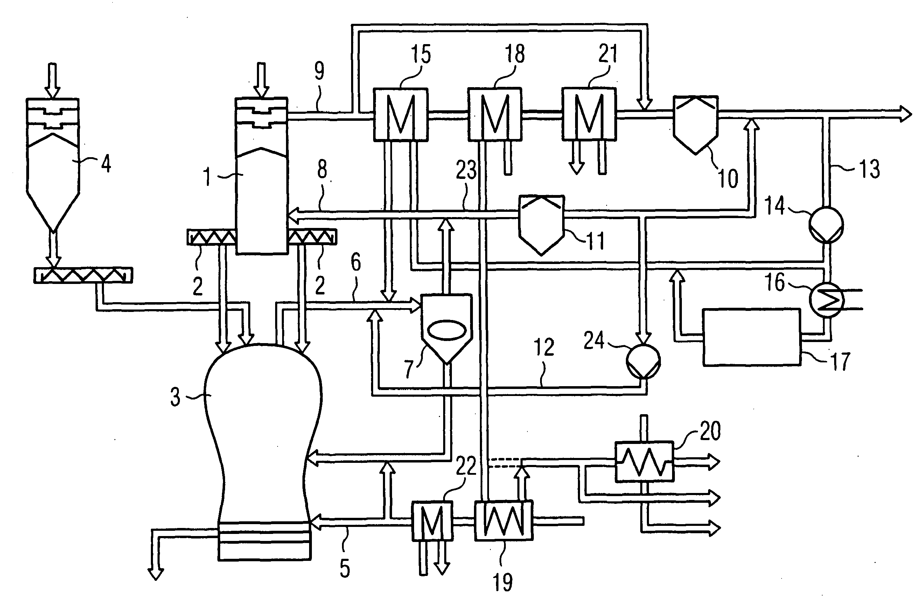

In der nachfolgenden Beschreibung soll die Erfindung anhand eines bevorzugten Ausführungsbeispiels und unter Bezugnahme auf die beigefügte Zeichnung näher erläutert werden.

In einen Reduktionsschacht 1 wird von stückiges oder pelletförmiges Eisenerz, gegebenenfalls mit ungebrannten Zuschlagsstoffen, zugeführt. Über Austragsvorrichtungen 2 wird der im Reduktionsschacht 1 erzeugte Eisenschwamm und die teilweise gebrannten (kalzinierten) Zuschlagstoffe in den Kopf eines Einschmelzvergasers 3 eingebracht. Am Boden des Einschmelzvergasers 3 sammeln sich flüssiges Roheisen und über diesem flüssige Schlacke, die über Abstiche vorzugsweise diskontinuierlich abgezogen werden. Aus einem Vorratsschacht 4 wird dem Einschmelzvergaser 3 ein Vergasungsmittel zugeführt, vorzugsweise Kohle oder Kohlebriketts allenfalls gemischt mit ausgesiebtem Unterkorn des Eisenerzes, das ansonsten für den Reduktionsprozess nicht verwendet werden könnte. Über Gasleitungen 5 wird im unteren Bereich des Einschmelzvergasers 3 ein sauerstoffhaltiges Gas zugeführt.

Das erzeugte Reduktionsgas wird über eine Leitung 6 aus dem Kopf des Einschmelzvergasers 3 herausgeführt, in einem Heißgaszyklon 7 von festen Bestandteilen, insbesondere Staub und feinkörniger pyroliserter Kohle befreit und gelangt dann über eine Leitung 8 in den Reduktionsschacht 1. In diesem durchströmt das Reduktionsgas die Schüttung aus Eisenerz und Zuschlagsstoffen im Gegenstrom und reduziert hierbei das Eisenerz zu Eisenschwamm und kalziniert teilweise die Zuschlagstoffe.

Der im Heißgaszyklon 7 abgeschiedene, pyrolisierte Kohlenstaub und andere partikelförmige Inhaltsstoffe werden zum Einschmelzvergaser 3 zurückgeführt, vorzugsweise bei Eintritt in diesen durch in der Wand des Einschmelzvergasers 3 angeordnete Staubbrenner, denen auch sauerstoffhaltiges Gas zugeleitet wird, vergast.

Das zumindest teilweise verbrauchte Reduktionsgas wird am oberen Ende des Reduktionsschachtes 1 über eine Topgasleitung 9 abgezogen und dem Reinigungsaggregat 10 als Exportgas aufgrund des Gasüberschusses einer Verwertung und Gesamtenergieoptimierung zugeführt. Ein Anteil des Reduktionsgases wird zur Druckregelung der Anlage und als Kühlgas verwendet.. Dieser Anteil des Reduktionsgases wird durch die Leitung 23 aus dem in den Reduktionsschacht 1 geleiteten Reduktionsgasstrom abgetrennt. Die Leitung 23 ist somit der erste Teil des Kühlgas-und Überschussgas-Systems. Das zur Druckregelung der Anlage verwendete, Überschussgas genannte, Reduktionsgas wird nach dem Kühl- und Reinigungsaggregat 11 dem Exportgas beigemischt. Das als Kühlgas verwendete Reduktionsgas wird nach dem Kühl- und Reinigungsaggregat 11 und Komprimierung im Kompressor 24 über die Leitung 12 in die Leitung 6 vor dem Heißgaszyklon 7 rückgeführt.

Um nun das Exportgas in energieoptimaler Weise für den Prozess selbst nutzbar zu machen und vorzugsweise zumindest als Anteil des im Reduktionsschacht 1 benötigtes Reduktionsgas zu verwenden, wird zumindest ein Teil des Exportgases über hinter dem Reinigungsaggregat 10 über eine Leitung 13 mittels eines Kompressors 14 mit einem möglichst hohen Saugdruck abgezweigt und verdichtet. Allenfalls kann auch Überschussgas hinter dem Kühl- und Reinigungsaggregat 11 über eine weitere Leitung bereits vor der Beimischung zum Exportgas abgezweigt und rückgeführt werden.

Das rückgeführte Exportgas wird unter Ausnutzung des Energieinhaltes des unmittelbar aus dem Reduktionsschacht 1 abgezogenen Topgases, das eine Temperatur zwischen ca. 250°C und 500°C hat, von einer Temperatur nach dem Kühl- und Reinigungsaggregat von ca. 40°C auf bis zu etwa 400°C aufgeheizt. Dazu ist in der Leitung 9 für das Topgas noch vor dem Reinigungsaggregat 10 ein Wärmetauscher 15 eingesetzt, der auch vom über die Leitung 13 abgezweigten Anteil des Exportgases durchströmt wird. Das erhitzte Exportgas wird nach Durchlaufen des Wärmetauschers 15 in die Leitung 6 für das Kuppelgas des Einschmelzvergasers 3, noch vor dem Heißgaszyklon 7, eingespeist. Der solcherart verbesserte Prozess weist erhöhte Energieeffizienz durch geringere, zur Kühlung des Topgases erforderliche Prozesswassermengen auf, was weiter auch eine Reduktion des Energiebedarfs für die Prozesswasserpumpen bedeutet. Ebenso wird die vom Topgas ins Prozesswasser abgeführte Wärme reduziert, die über Kühltürme verloren geht oder über Verdunstung Wasserverluste im System bewirkt, die ständig ausgeglichen werden müssen.

Allenfalls kann zumindest ein Anteil des über die Leitung 13 abgezweigten Exportgases nach Zwischenkühlung auf 30-50°C im Kühler 16 und Reduktion des CO₂-Gehaltes auf 2-3 Vol-% in der Anlage 17 zur CO₂-Entfernung dem Wärmetauscher 15 zugeführt werden. Das gekühlte und CO₂-reduzierte Gas könnte auch, was die genaue Einstellung von Temperatur und/oder CO₂-Gehalt im rückgeführten Gas gestattet, mit unbehandeltem rückgeführten Gas vor Eintritt in den Wärmetauscher 15 gemischt werden.

Das rückgeführte Topgas kann nach Passieren des Wärmetauschers 15 auch in den Einschmelzvergaser 3 eingebracht werden, vorzugsweise über in die Sauerstoffdüsen eingeführte Lanzen, wobei die Rückleitung für das Topgas bis zur Mündung der Sauerstoffzuführung 5 parallel zu dieser verläuft. Das rückgeführte Topgas muss in diesem Fall nicht durch einen Reduktionsgasofen, elektrische Heizung oder Plasmabrenner unter Einsatz externer Energie aufgeheizt werden, sondern es wird die Wärmeenergie des Topgases vor dem Reinigungsaggregat 10 ausgenützt. Damit ergeben sich die bereits oben angeführten Vorteile der Erhöhung der Energieeffizienz des Prozesses, geringerer zur Kühlung des Topgases erforderliche Prozesswassermengen, Reduktion des Energiebedarfs der Prozesswasserpumpen, und Reduktion der vom Topgas ins Prozesswasser abgeführten Wärme, die über Kühltürme verloren geht oder über Verdunstung Wasserverluste im System bewirkt.

Alternativ oder auch zusätzlich zum beschriebenen Wärmetauscher 15 für das rückgeführte Exportgas kann ein Wärmetauscher 18 in die Leitung 9 für das Topgas noch vor dem Reinigungsaggregat 10 eingesetzt sein, der von einem Wärmeträgermedium wie etwa Abfall-N₂ durchströmt wird. Der Wärmetauscher 18 bildet zusammen mit einem weiteren Wärmetauscher 19 einen Kreislauf für das Wärmeträgermedium. Der Wärmetauscher 19 wird vorzugsweise durch ein dem Einschmelzvergaser 3 zuzuführendes Gas, vorzugsweise durch den einzudüsenden Sauerstoff, durchströmt, welches Gas somit mittelbar und mit höchstmöglicher Sicherheit aufgrund nicht-reaktiver Paarung von beispielsweise Sauerstoff mit dem Wärmeträgermedium durch den Energieinhalt des Topgases aufgeheizt wird. Durch die höhere Temperatur des Sauerstoffes der über die Düsen bzw. über die Staubbrenner in den Schmelzvergaser eingeblasen wird ergibt sich ein niedrigerer Reduktionsmittelverbrauch und daher Einsparung von Kohle und Kohlebriketts als Reduktionsmittei', da diese Wärme zumindest einen Teil der bei der Vergasung der Kohle, Kohlebriketts und gegebenenfalls Koks mit Sauerstoff freiwerdende Wärme ersetzen kann, die zum Kalzinieren der Zuschlagstoffe, zum Aufwärmen des Festbettes im Einschmelzvergaser (Kohle, Kohlebriketts, DRI, Zuschläge) und zum Aufschmelzen des DRI benötigt wird. Darüber hinaus kann die Menge an Sauerstoff ebenfalls reduziert werden. Durch die Vorwärmung des Sauerstoffs werden ebenfalls höhere Eindüsraten von Topgas, rezirkuliertem Produktgas aus einer CO₂-Entfernungsanlage, von einer Feinkohleeindüsung oder Kunststoffeindüsung, usw. ermöglicht und in Kombination mit der Rückführung von erwärmtem Topgas in den Einschmelzvergaser kann die Rezirkulationsmenge an Topgas bzw. PSA-Produktgas bzw. können deren Eindüsraten maximiert werden.

Alternativ oder zusätzlich kann im Kreislauf des Wärmetauschers 18 und des ihn durchströmenden, die Energie des Topgases aufnehmenden Wärmeträgerfluids ein Wärmetauscher 20 eingesetzt sein, in welchem Verbrennungsluft oder Trocknungsmedium, beispielsweise Luft, N₂, Abgas, od. dgl., für einen Erz- und /oder Kohletrockner erhitzt wird. Damit kann auch hier Brennstoff eingespart werden.

Schließlich ist auch die alternative oder zusätzliche Anordnung eines durch Dampf als Wärmeträgerfluid durchströmten Wärmetauschers 21 als alternative Ausführungsform der Anlage denkbar. Dieser Wärmetauscher 21 bildet dann in ähnlicher Weise wie oben beschrieben zusammen mit einem weiteren Wärmetauscher 22 einen Kreislauf, wobei auch hier der Wärmetauscher 22 vorzugsweise durch ein dem Einschmelzvergaser 3 zuzuführendes Gas durchströmt wird.

Speziell die vom Topgas durchströmten Wärmetauscher 15, 18 bzw. 21 sind bevorzugterweise als Rohr- oder Rohrbündelwärmetauscher ausgeführt, wobei das ja vor dem Reinigungsaggregat 10 noch verunreinigte Topgas in vertikaler Richtung von oben nach unten geführt wird, um Staubablagerungen zu vermeiden.

Anstelle in die Leitung 9 für das aus dem Reduktionsschacht 1 abgezogene Topgas könnten die Wärmetauscher 15, 18 bzw. 21 oder können zusätzliche Wärmetauscher auch in das Kühlgas- und Überschussgas-System eingesetzt sein, welches durch etwas geringere Gasmengen, jedoch höhere Temperaturen von ca. 750°C bis 850°C charakterisiert ist. Bevorzugt ist dabei die Anordnung eines oder mehrerer Wärmetauscher in der Leitung 23 für das Reduktionsgas zwischen dem Reinigungsaggregat 11 und der Abzweigung von Leitung 8 (Gas zum Reduktionsschacht 1), wobei hier aufgrund der hohen Temperaturen des in dieser Leitung fließenden, zur Verwendung als Kühlgas und als Überschussgas vorgesehenen Anteils des Reduktionsgases trotz des Wärmetausches Reduktionsgastemperaturen im Bereichs von ca. 400°C gewährleistet werden können, dennoch aber ausreichend Wärmeenergie auf die anderen, aufzuheizenden Prozessgase übertragen werden kann. Dabei kann sowohl im Topgassystem als auch im Kühlgas- und Überschussgas-System eine Bypassleitung um die Wärmetauscher 15, 18, 21 herum vorgesehen sein.

## Patentansprüche

1. Verfahren zur Herstellung von geschmolzenem Metall, wobei Sauerstoff, Reduktionsmittel und in zumindest einem Reduktionsreaktor reduziertes Eisen in einen Schmelzvergaser (3) eingebracht werden, das Reduktionsmittel mit dem Sauerstoff vergast und durch die dabei entstehende Wärme das reduzierte Eisen geschmolzen wird, wobei das Kuppelgas aus dem Schmelzvergaser (3) als zumindest ein Anteil des Reduktiorisgases verwendet wird, und wobei reagiertes Topgas aus dem Reduktionsreaktor (1) abgezogen wird, **dadurch gekennzeichnet, dass** zumindest ein Teil der Wärmeenergie des Topgases und/oder des zur Verwendung als Kühlgas und als Überschussgas vorgesehenen Anteils des Reduktionsgases zum indirekten Aufheizen zumindest eines weiteren der im Verfahren verwendeten Gase genutzt wird,
wobei die weiteren im Verfahren verwendenten Gase
- nach zumindest einer Kühlung und Reinigung in den Reduktionsreaktor rückgeführes Topgas,
- nach zumindest einer Kühlung und Reinigung in den Schmelzvergaser eingebrachtes Topgas,
- Sauerstoff für den Schmelzvergaser,
sind.

2. Verfahren nach Anspruch 1, **dadurch gekennzeichnet, dass** zumindest ein Teil des Topgases nach zumindest einer Kühlung und Reinigung, und einem Wärmetausch mit dem Topgas und/oder dem zur Verwendung als Kühlgas und als Überschussgas vorgesehenen Anteil des Reduktionsgases in den Reduktionsreaktor (1) rückgeführt wird.

3. Verfahren nach Anspruch 2, **dadurch gekennzeichnet, dass** die Reinigung mittels einer Nasswäsche erfolgt.

4. Verfahren nach Anspruch 2 oder 3, **dadurch gekennzeichnet, dass** das rückgeführte, erwärmte Topgas dem Kuppelgas zugegeben und gemeinsam mit diesem dem Reduktionsreaktor (1) zugeführt wird.

5. Verfahren nach Anspruch 4, **dadurch gekennzeichnet, dass** partikelförmige Inhaltsstoffe vor Eintritt in den Reduktionsreaktor (1) aus dem Gasgemisch aus erwärmtem Topgas und Kuppelgas abgeschieden werden.

6. Verfahren nach Anspruch 1, **dadurch gekennzeichnet, dass** zumindest ein Teil des Topgases nach zumindest einer Kühlung und Reinigung, und Wärmetausch mit dem Topgas und/oder dem zur Verwendung als Kühlgas und als Überschussgas vorgesehenen Anteil des Reduktionsgases in einem Reinigungsaggregat (10) in den Schmelzvergaser (3) eingebracht wird.

7. Verfahren nach einem der Ansprüche 2 bis 6, **dadurch gekennzeichnet, dass** das rückgeführte Topgas vor dem Wärmetausch verdichtet und/oder dessen Kohlendioxid-Gehalt nach Abkühlung reduziert wird.

8. Verfahren nach Anspruch 7, **dadurch gekennzeichnet, dass** die Abkühlung auf 30 bis 50°C erfolgt.

9. Verfahren nach Anspruch 7 oder Anspruch 8, **dadurch gekennzeichnet, dass** der Kohlendioxid-Gehalt auf 2 bis 3 Vol-% reduziert wird.

10. Verfahren nach einem der obigen Ansprüche, **dadurch gekennzeichnet, dass** die Wärmeenergie des Topgases und/oder des zur Verwendung als Kühlgas und als Überschussgas vorgesehenen Anteils des Reduktionsgases zum Aufheizen des Sauerstoffs für den Schmelzvergaser (3) verwendet wird.

11. Verfahren nach Anspruch 10, **dadurch gekennzeichnet, dass** der Wärmetausch zwischen dem Topgas und/oder dem zur Verwendung als Kühlgas und als Überschussgas vorgesehenen Anteil des Reduktionsgases, und dem Sauerstoff über ein Trägermedium und zwei Wärmetauschprozesse erfolgt.

12. Verfahren nach Anspruch 11, **dadurch gekennzeichnet, dass** das Trägermedium nach Wärmetausch mit dem Sauerstoff, allenfalls zusammen mit einem Teilstrom des ungekühlten Trägermediums zur Vorwärmung von im Verfahren benötigtem Verbrennungsgas genutzt wird.

13. Verfahren nach Anspruch 10, **dadurch gekennzeichnet, dass** die Wärmeenergie des Topgases und/oder dem zur Verwendung als Kühlgas und als Überschussgas vorgesehenen Anteil des Reduktionsgases zur Dampferzeugung genutzt wird.

14. Verfahren nach Anspruch 13, **dadurch gekennzeichnet, dass** die Wärmeenergie des Dampfes zur Aufheizung des Sauerstoffes für den Schmelzvergaser (3) verwendet wird.

15. Anlage zur Herstellung von geschmolzenem Metall, mit einem Reduktionsreaktor (1) mit Reduktlonsgaszufühmng, einem Schmelzvergaser (3) mit Sauerstoffzuführung (5) und einem Zuführsystem für Reduktionsmittel, zumindest einer Leitung (6) für die Zuführung des Kuppelgases aus dem Schmelzvergaser (3) in den Reduktionsreaktor (1) und zumindest einer Leitung (9) für das Abziehen des Topgases aus dem Reduktionsreaktor (1), in welcher zumindest ein Reinigungsaggregat (10) vorgesehen ist, **gekennzeichnet durch** zumindest einen Wärmetauscher (15, 18, 21) in der Leitung (9) für das Abziehen des Topgases und/oder im Kühlgas-und Überschussgas-System, welcher Wärmetauscher (15, 18, 21) **durch** zumindest eines der weiteren im Verfahren verwendeten Gase durchströmt wird,
wobei die weiteren im Verfahren verwendeten Gase
- nach zumindest einer Kühlung und Reinigung in den Reduktionsreaktor rückgeführes Topgas,
- nach zumindest einer Kühlung und Reinigung in den Schmelzvergaser eingebrachtes Topgas,
- Sauerstoff für den Schmelzvergaser,
sind.

16. Anlage nach Anspruch 15, **dadurch gekennzeichnet, dass** das Reinigungsaggregat (10) als Nasswäscher ausgeführt ist

17. Anlage nach Anspruch 15 oder 16, **dadurch gekennzeichnet, dass** der oder jeder Wärmetauscher (15, 18, 21) als Rohrwärmetauscher oder Rohrbündelwärmetauscher, ausgeführt ist, wobei die Rohre für das unbehandelte Topgas im wesentlichen vertikal orientiert sind und vom Topgas von oben nach unten durchströmt werden.

18. Anlage nach Anspruch 15, 16 oder 17, **dadurch gekennzeichnet, dass** nach einem Reinigungsaggregat (10) für das Topgas eine Rückleitung (13) für das Topgas ausgeht und zum Wärmetauscher (15) führt, und dass die Rückleitung vom Wärmetauscher (15) weiter zum Reduktionsreaktor (1) führt.

19. Anlage nach Anspruch 18, **dadurch gekennzeichnet, dass** die Rückleitung vom Wärmetauscher (15) in die Verbindungsleitung (6) für das Kuppelgas zwischen Schmelzvergaser (3) und Reduktionsreaktor (1) mündet..

20. Anlage nach Anspruch 19, **dadurch gekennzeichnet, dass** die Rückleitung vom Wärmetauscher (15) vor einem allfälligen Parfikelabscheider (7) in die Verbindungsleitung (6) mündet.

21. Anlage nach Anspruch 15 oder 16, **dadurch gekennzeichnet, dass** nach dem Reinigungsaggregat (10) eine Rückleitung (13) für das Topgas ausgeht und zum Wärmetauscher (15) führt, und dass die Rückleitung vom Wärmetauscher (15) weiter zum Schmelzvergaser (3) führt.

22. Anlage nach Anspruch 21, **dadurch gekennzeichnet, dass** die Rückleitung vom Wärmetauscher (15) bis zur Mündung der Sauerstoffzuführung (5) parallel zu dieser verläuft.

23. Anlage nach einem der Ansprüche 18 bis 22, **dadurch gekennzeichnet, dass** vor dem Wärmetauscher (15) ein Verdichter (14), allenfalls auch eine Kühleinrichtung (16) und eine Kohlendioxid-Reduktionsstufe (17), eingesetzt sind, wobei der Ausgang des Verdichters (14) und der Ausgang der Kohleridioxid-Reduktionsstufe (17) in eine gemeinsame Zuführleitung zum Wärmetauscher (15) führen.

24. Anlage nach einem der Ansprüche 15,16 oder 17, **dadurch gekennzeichnet, dass** in der Sauerstoffzuführung (5) zum Schmelzvergaser (3) ein weiterer Wärmetauscher (19 bzw. 22) eingesetzt ist, der mit zumindest einem durch das Topgas und/oder dem zur Verwendung als Kühlgas und als Überschussgas vorgesehenen Anteil des Reduktionsgases durchströmten Wärmetauscher (18 bzw. 21) einen von einem Wärmeträgerfluid durchströmten Kreis bildet.

25. Anlage nach Anspruch 24, **dadurch gekennzeichnet, dass** das Wärmeträgerfluid in flüssiger und/oder dampfförmiger Form vorliegt.

26. Anlage nach Anspruch 24 oder 25, **dadurch gekennzeichnet, dass** im Kreis des Wärmeträgerfluids zumindest ein weiterer Wärmetauscher (20) für zumindest ein im Verfahren benötigtes Verbrennungsgas angeordnet ist.

## Claims

1. Method for the production of molten metal, oxygen, a reducing agent and iron reduced in at least one reduction reactor being introduced into a melt gasifier (3), the reducing agent being gasified with the oxygen, and the reduced iron being melted by means of the heat which in this case occurs, the cupola gas from the melt gasifier (3) being used as at least a fraction of the reduction gas, and reacted top gas being drawn off from the reduction reactor (1), **characterized in that** at least part of the heat energy of the top gas and/or of the fraction of the reduction gas which is provided for use as cooling gas and as excess gas is utilized for the indirect heating of at least one of the further gases used in the method,
the further gases used in the method being
- top gas recirculated into the reduction reactor after at least cooling and cleaning,
- top gas introduced into the melt gasifier after at least cooling and cleaning,
- oxygen for the melt gasfier.

2. Method according to Claim 1, **characterized in that** at least part of the top gas is recirculated into the reduction reactor (1) after at least cooling and cleaning, and heat exchange with the top gas and/or the fraction of the reduction gas which is provided for use as cooling gas and as excess gas.

3. Method according to Claim 2, **characterized in that** the cleaning takes place by means of a wet wash.

4. Method according to Claim 2 or 3, **characterized in that** the recirculated heated top gas is administered to the cupola gas and is supplied, together with the latter, to the reduction reactor (1).

5. Method according to Claim 4, **characterized in that** particulate contents, before entering the reduction reactor (1), are separated from the gas mixture of heated top gas and cupola gas.

6. Method according to Claim 1, **characterized in that** at least part of the top gas is introduced into the melt gasifier (3) after at least cooling and cleaning, and heat exchange with the top gas and/or the fraction of the reduction gas which is provided for use as cooling gas and as excess gas in a cleaning assembly (10).

7. Method according to one of Claims 2 to 6, **characterized in that** the recirculated top gas is compressed before heat exchange and/or its carbon dioxide content is reduced after cooling.

8. Method according to Claim 7, **characterized in that** the cooling is effected to 30 to 50°C.

9. Method according to Claim 7 or Claim 8, **characterized in that** the carbon dioxide content is reduced to 2 to 3% by volume.

10. Method according to one of the above claims, **characterized in that** the heat energy of the top gas and/or of the fraction of the reduction gas which is provided for use as cooling gas and as excess gas is used for heating the oxygen for the melt gasifier (3).

11. Method according to Claim 10, **characterized in that** heat exchange between the top gas and/or the fraction of the reduction gas which is provided for use as cooling gas and as excess gas, and the oxygen takes place via a transfer medium and two heat exchange processes.

12. Method according to Claim 11, **characterized in that** the transfer medium, after heat exchange with the oxygen, is utilized, at most together with a part stream of the uncooled transfer medium, for the preheating of combustion gas required in the method.

13. Method according to Claim 10, **characterized in that** the heat energy of the top gas and/or the fraction of the reduction gas which is provided for use as cooling gas and as excess gas is utilized for steam generation.

14. Method according to Claim 13, **characterized in that** the heat energy of the steam is used for heating the oxygen for the melt gasifier (3).

15. Plant for the production of molten metal, with reduction reactor (1) having a reduction gas supply, with a melt gasifier (3) having an oxygen supply (5), and a supply system for reducing agent, at least one line (6) for the supply of the cupola gas from the melt gasifier (3) into the reduction reactor (1) and at least one line (9) for drawing off the top gas from the reduction reactor (1), at least one cleaning assembly (10) being provided in said line, **characterized by** at least one heat exchanger (15, 18, 21) in the line (9) for drawing off the top gas and/or in the cooling gas and excess gas system, at least one of the further gases used in the method flowing through said heat exchanger (15, 18, 21),
the further gases used in the method being
- top gas recirculated into the reduction reactor after at least cooling and cleaning,
- top gas introduced into the melt gasifier after at least cooling and cleaning,
- oxygen for the melt gasfier.

16. Plant according to Claim 15, **characterized in that** the cleaning assembly (10) is designed as a wet washer.

17. Plant according to Claim 15 or 16, **characterized in that** the or each heat exchanger (15, 18, 21) is designed as a tube heat exchanger or tube-bundle heat exchanger, the tubes being oriented essentially vertically for the untreated top gas, and the top gas flowing through them from above downward.

18. Plant according to Claim 15, 16 or 17, **characterized in that** a return line (13) for the top gas emanates downstream of a cleaning assembly (10) for the top gas and leads to the heat exchanger (15), and **in that** the return line leads from the heat exchanger (15) further on to the reduction reactor (1).

19. Plant according to Claim 18, **characterized in that** the return line from the heat exchanger (15) issues into the connecting line (6) for the cupola gas between the melt gasifier (3) and reduction reactor (1).

20. Plant according to Claim 19, **characterized in that** the return line from the heat exchanger (15) issues into the connecting line (6) upstream of any particle separator (7).

21. Plant according to Claim 15 or 16, **characterized in that** a return line (13) for the top gas emanates downstream of the cleaning assembly (10) and leads to the heat exchanger (15), and **in that** the return line leads from the heat exchanger (15) further on to the melt gasifier (3).

22. Plant according to Claim 21, **characterized in that** the return line from the heat exchanger (15) runs as far as the issue of the oxygen supply (5) and parallel to the latter.

23. Plant according to one of Claims 18 to 22, **characterized in that** a compressor (14), at most also a cooling device (16) and a carbon dioxide reduction stage (17), are inserted upstream of the heat exchanger (15), the outlet of the compressor (14) and the outlet of the carbon dioxide reduction stage (17) leading into a common supply line to the heat exchanger (15).

24. Plant according to one of Claims 15, 16 or 17, **characterized in that**, in the oxygen supply (5) to the melt gasifier (3), a further heat exchanger (19 or 22) is inserted, which, together with at least one heat exchanger (18 or 21) through which the top gas and/or the fraction of the reduction gas which is provided for use as cooling gas and as excess gas flows, forms a circuit through which a heat transfer fluid flows.

25. Plant according to Claim 24, **characterized in that** the heat transfer fluid is present in liquid and/or vaporous form.

26. Plant according to Claim 24 or 25, **characterized in that** at least one further heat exchanger (20) for at least one combustion gas required in the method is arranged in the circuit of the heat transfer fluid.

## Revendications

1. Procédé de fabrication de métal fondu, selon lequel de l'oxygène, un réducteur et du fer réduit dans au moins un réacteur de réduction sont introduits dans un gazogène à fusion (3), le réducteur est gazéifié avec l'oxygène et le fer réduit est fondu par la chaleur ainsi formée, le sous-produit gazeux issu du gazogène à fusion (3) étant utilisé au moins en tant que partie du gaz réducteur, et le gaz de gueulard réagi issu du réacteur de réduction (1) étant soutiré, **caractérisé en ce qu'**au moins une partie de l'énergie thermique du gaz de gueulard et/ou de la fraction du gaz réducteur prévue pour être utilisée en tant que gaz de refroidissement et en tant que gaz d'excès est utilisée pour le chauffage indirect d'au moins un autre des gaz utilisés dans le procédé,
les autres gaz utilisés dans le procédé étant
- le gaz de gueulard recyclé dans le réacteur de réduction après au moins un refroidissement et une purification,
- le gaz de gueulard introduit dans le gazogène à fusion après au moins un refroidissement et une purification,
- l'oxygène pour le gazogène à fusion.

2. Procédé selon la revendication 1, **caractérisé en ce qu'**au moins une partie du gaz de gueulard est recyclée dans le réacteur de réduction (1) après au moins un refroidissement et une purification, et un échange de chaleur avec le gaz de gueulard et/ou la fraction du gaz réducteur prévue pour être utilisée en tant que gaz de refroidissement et en tant que gaz d'excès.

3. Procédé selon la revendication 2, **caractérisé en ce que** la purification a lieu au moyen d'une épuration humide.

4. Procédé selon la revendication 2 ou 3, **caractérisé en ce que** le gaz de gueulard réchauffé recyclé est ajouté au sous-produit gazeux et est introduit avec celui-ci dans le réacteur de réduction (1).

5. Procédé selon la revendication 4, **caractérisé en ce que** des matériaux particulaires sont séparés du mélange gazeux du gaz de gueulard réchauffé et du sous-produit gazeux avant l'entrée dans le réacteur de réduction (1).

6. Procédé selon la revendication 1, **caractérisé en ce qu'**au moins une partie du gaz de gueulard est introduite dans le gazogène à fusion (3) après au moins un refroidissement et une purification, et un échange de chaleur avec le gaz de gueulard et/ou la fraction du gaz réducteur prévue pour être utilisée en tant que gaz de refroidissement et en tant que gaz d'excès, dans un appareil de purification (10).

7. Procédé selon l'une quelconque des revendications 2 à 6, **caractérisé en ce que** le gaz de gueulard recyclé est comprimé avant l'échange de chaleur et/ou sa teneur en dioxyde de carbone est réduite par refroidissement.

8. Procédé selon la revendication 7, **caractérisé en ce que** le refroidissement a lieu à une température de 30 à 50 °C.

9. Procédé selon la revendication 7 ou 8, **caractérisé en ce que** la teneur en dioxyde de carbone est réduite à une teneur de 2 à 3 % en volume.

10. Procédé selon l'une quelconque des revendications précédentes, **caractérisé en ce que** l'énergie thermique du gaz de gueulard et/ou de la fraction du gaz réducteur prévue pour être utilisée en tant que gaz de refroidissement et en tant que gaz d'excès est utilisée pour le chauffage de l'oxygène pour le gazogène à fusion (3).

11. Procédé selon la revendication 10, **caractérisé en ce que** l'échange de chaleur entre le gaz de gueulard et/ou de la fraction du gaz réducteur prévue pour être utilisée en tant que gaz de refroidissement et en tant que gaz d'excès, et l'oxygène a lieu par un milieu porteur et deux processus d'échange de chaleur.

12. Procédé selon la revendication 11, **caractérisé en ce que** le milieu porteur est utilisé après l'échange de chaleur avec l'oxygène, éventuellement avec un courant partiel du milieu porteur non refroidi, pour le préchauffage du gaz de combustion nécessaire dans le procédé.

13. Procédé selon la revendication 10, **caractérisé en ce que** l'énergie thermique du gaz de gueulard et/ou de la fraction du gaz réducteur prévue pour être utilisée en tant que gaz de refroidissement et en tant que gaz d'excès est utilisée pour la génération de vapeur.

14. Procédé selon la revendication 13, **caractérisé en ce que** l'énergie thermique de la vapeur est utilisée pour le chauffage de l'oxygène pour le gazogène à fusion (3).

15. Installation pour la fabrication de métal fondu, comprenant un réacteur de réduction (1) muni d'une alimentation de gaz réducteur, un gazogène à fusion (3) muni d'une alimentation d'oxygène (5) et un système d'alimentation pour un réducteur, au moins une conduite (6) pour l'introduction du sous-produit gazeux issu du gazogène à fusion (3) dans le réacteur de réduction (1) et au moins une conduite (9) pour le soutirage du gaz de gueulard à partir du réacteur de réduction (1), dans laquelle au moins un appareil de purification (10) est prévu, **caractérisée par** au moins un échangeur de chaleur (15, 18, 21) dans la conduite (9) pour le soutirage du gaz de gueulard et/ou dans le système de gaz de refroidissement et de gaz d'excès, ledit échangeur de chaleur (15, 18, 21) étant traversé par au moins un des autres gaz utilisés dans le procédé,
les autres gaz utilisés dans le procédé étant
- le gaz de gueulard recyclé dans le réacteur de réduction après au moins un refroidissement et une purification,
- le gaz de gueulard introduit dans le gazogène à fusion après au moins un refroidissement et une purification,
- l'oxygène pour le gazogène à fusion.

16. Installation selon la revendication 15, **caractérisée en ce que** l'appareil de purification (10) est configuré sous la forme d'un épurateur humide.

17. Installation selon la revendication 15 ou 16, **caractérisée en ce que** le ou chaque échangeur de chaleur (15, 18, 21) est configuré sous la forme d'un échangeur de chaleur tubulaire ou d'un échangeur de chaleur à faisceau de tubes, les tubes pour le gaz de gueulard non traité étant orientés essentiellement verticalement et étant traversés du haut vers le bas par le gaz de gueulard.

18. Installation selon la revendication 15, 16 ou 17, **caractérisée en ce qu'**une conduite de recyclage (13) pour le gaz de gueulard part après un appareil de purification (10) pour le gaz de gueulard et conduit à l'échangeur de chaleur (15), et **en ce que** la conduite de recyclage issue de l'échangeur de chaleur (15) conduit ensuite au réacteur de réduction (1).

19. Installation selon la revendication 18, **caractérisée en ce que** la conduite de recyclage issue de l'échangeur de chaleur (15) débouche dans la conduite de connexion (6) pour le sous-produit gazeux entre le gazogène à fusion (3) et le réacteur de réduction (1).

20. Installation selon la revendication 19, **caractérisée en ce que** la conduite de recyclage issue de l'échangeur de chaleur (15) débouche avant un séparateur de particules éventuel (7) dans la conduite de connexion (6).

21. Installation selon la revendication 15 ou 16, **caractérisée en ce qu'**une conduite de recyclage (13) pour le gaz de gueulard part après l'appareil de purification (10) et conduit à l'échangeur de chaleur (15), et **en ce que** la conduite de recyclage issue de l'échangeur de chaleur (15) conduit ensuite au gazogène à fusion (3).

22. Installation selon la revendication 21, **caractérisée en ce que** la conduite de recyclage issue de l'échangeur de chaleur (15) est parallèle à l'alimentation d'oxygène (5) jusqu'à l'embouchure de celle-ci.

23. Installation selon l'une quelconque des revendications 18 à 22, **caractérisée en ce qu'**un compresseur (14), éventuellement également un dispositif de refroidissement (16) et une étape de réduction du dioxyde de carbone (17), sont utilisés avant l'échangeur de chaleur (15), la sortie du compresseur (14) et la sortie de l'étape de réduction du dioxyde de carbone (17) conduisant à l'échangeur de chaleur (15) dans une conduite d'alimentation commune.

24. Installation selon l'une quelconque des revendications 15, 16 ou 17, **caractérisée en ce qu'**un échangeur de chaleur supplémentaire (19 ou 22) est utilisé dans l'alimentation d'oxygène (5) vers le gazogène à fusion (3), qui forme avec au moins un échangeur de chaleur (18 ou 21) traversé par le gaz de gueulard et/ou la fraction du gaz réducteur prévue pour être utilisée en tant que gaz de refroidissement et en tant que gaz d'excès un circuit traversé par un fluide caloporteur.

25. Installation selon la revendication 24, **caractérisée en ce que** le fluide caloporteur se présente sous forme liquide et/ou gazeuse.

26. Installation selon la revendication 24 ou 25, **caractérisée en ce qu'**au moins un échangeur de chaleur supplémentaire (20) pour au moins un gaz de combustion nécessaire dans le procédé est placé dans le circuit du fluide caloporteur.
